# EUROPEAN PATENT APPLICATION

(11) **EP 4 155 350 A1**
(43) Date of publication of application: **29.03.2023**
(21) Application number: 22197571.7
(22) Date of filing: 23.09.2022
(51) Int. Cl.: C09D 5/00, C09D 5/16

(54) **INOX STEEL MORTAR, FREE FROM CEMENTITIOUS COMPONENTS**

(30) Priority: 23.09.2021 IT 202100024460
(71) Applicant: Reverberi, Ezio, 52100 Arezzo (IT)
(72) Inventor: Reverberi, Ezio, 52100 Arezzo (IT)
(74) Representative: Petraz, Davide Luigi

(57) **Abstract**

The mixture to protect a surface from corrosion comprises an agglomerant based on one or more self-crosslinking aliphatic resins in aqueous solution, in which a metal material comprising metal granules is dispersed.

## Description

### FIELD OF THE INVENTION

Embodiments described here concern a stainless-steel mortar-like mixture, free of cementitious components, to protect a surface from corrosion, for example that can be used to protect concrete reinforcement rods, or in other situations in various product sectors where it is necessary to protect surfaces from corrosion in order to improve good conservation thereof. More particularly, the invention concerns, for example, a mixture with a consistency similar to that of mortar, to be applied on damaged reinforcement rods so as to restore and protect them, more specifically to be applied on reinforcement rods damaged by corrosion.

### BACKGROUND OF THE INVENTION

It is known that artifacts made of reinforced concrete are subject over time to degradation caused by the corrosion of the rod that makes up the reinforcement.

This is at least partly due to the hygroscopic and highly alkaline character of the concrete which, in buildings located outdoors, absorbs the water produced by atmospheric events while at the same time being subject to the corrosive action of the wind, it also absorbs the saline humidity of the marine aerosol in areas by the sea, or absorbs run-off waters which generally contain additives such as sea salt or antifreeze.

The absorption by the concrete of water and humidity from the external environment causes the polluted liquids to stagnate inside the concrete, creating a humid and acidic environment that corrodes the cementitious environment, which on the contrary is alkaline. The humid and acidic environment also acts on the reinforcement rods, corroding them and creating an incoherent layer of rust.

The rust builds up on the rod, reducing its qualities of structural strength and flexibility, with the consequence that it reduces the ability to absorb the torsions and vibrations to which the reinforced concrete product is subjected. In addition, the rust causes a significant increase in the volume of the rod, which exerts enormous pressures on the concrete such as to cause breaking areas or lines, increasingly wider as the rust increases.

To solve the problem of rust it is known to bring to light the rusty rods by demolishing the degraded cementitious part and to carry out cleaning operations on the rods, intended to remove the rust. Subsequently, the rods are protected by known techniques.

One example of a known protection technique is zinc plating, which provides to deposit zinc on the rods. Zinc plating can be performed by cathodic deposition with an electrolytic system, or cold by spraying zinc-based paints. One disadvantage of these deposit methods is that the zinc content is low, therefore it guarantees chemical protection of infinitesimal thickness and limited duration, especially outdoors where the zinc layer is degraded by the weather. For effective zinc plating, hot industrial systems can be used in which the rod is immersed in a bath of molten zinc. Obviously, this method is not feasible with reinforcement rods of the reinforced concrete once they are located in situ.

Another example of a known protection technique is the reconversion of the rust, which provides to consolidate the rust by impregnating it with variously formulated resins in order to use it as a base for subsequent painting. The results of this technique are generally disappointing, since in any case the rust tends to reform in a short time. Furthermore, the reconverted part of the rust is hard, rigid and easily fractured.

Yet another example of a known protection technique is the passivation of the rod, intended to prevent it from oxidizing. In the state of the art, the rod is passivated with concentrated sulfuric acid. In addition to the disadvantage of having to handle a chemical compound that is very dangerous for health and the environment, this technique has the disadvantage that it is necessary to cover the entire surface of the rod uniformly, in order to prevent oxygen from reacting with the metal, otherwise corrosion is not blocked.

Another disadvantage common to all the protection techniques mentioned above is that they are limited to the prevention of corrosion but do not restore the functional characteristics of the rod that have been lost with corrosion.

Other known solutions simply provide, after cleaning the rod, to cover it with concrete, and possibly to apply a water-repellent composition on the concrete in order to block the absorption of water and humidity. However, these solutions do not provide a specific treatment of the reinforcement rod, and the application of the water-repellent composition allows to create a film on the external surface of the concrete. This film has a very limited duration because of its degradation due, among other things, by the erosion caused by atmospheric elements such as wind.

Other solutions provide paints to be applied on the reinforcement rods which create a thin film, that is, with a thickness in the order of a nanometer. For example, US-A1-2010/206527 describes a method for the in-situ treatment of a metal surface by means of a dispersion of nanoparticles that creates a fluid and then a very thin film, to improve, among other things, the resistance to corrosion of the metal surface.

US-A1-2006/225612 concerns the protection of metals against corrosion by means of an industrial process which includes the preparation of an aqueous solution of epoxy-silane oligomer, under continuous water supply, in which solution metal particles are dispersed.

US-A1-2006/134339 describes a solution similar to the previous document, in which a coating paint is obtained in which metal particles are dispersed. These particles do not have a granulometry suitable for forming a mortar, but only a coating with a thickness in the order of a nanometer.

JP-A-2004292758 describes a paint with metal flakes to form a coating film with a thickness in the order of 5-50µm.

JP-A-2003171513 describes a water-based paint for painting metal sheets, so as to give the sheets a perfectly smooth surface which is then painted.

EP-A1-0962505 and EP-A1-1308483 describe sprayable paint compositions to form a nanometer film. The paints described therein are not such as to be spread on site with a trowel or to be sprayed by means of a plastering machine, for example.

Known paints have good antioxidant properties, but do not give the rod, reduced in its thickness due to the part corroded by rust removed by a preliminary cleaning, a reinforcement of some millimeters that is flexible and at the same time resistant to rust caused by the humidity of the rod. Furthermore, in the known paints the hydrated element has a dominant presence with respect to the inert element (metal flakes), this element generally having a very low granulometry, to prevent the precipitation of the inert element in the dispersion.

There is therefore a need to perfect a composition and a method which can overcome at least one of the disadvantages of the state of the art.

In order to do this, it is necessary to solve the technical problem of providing a composition that allows to protect a surface from corrosion in an effective and long-lasting way, in particular, but not limited to, protecting the reinforcement rod of the concrete from corrosion.

In particular, one purpose of the present invention is to provide a composition, and a corresponding method, which allows not only to protect but also to improve the resistance to corrosion of a surface, in particular of the reinforcement rod.

Another purpose of the invention is to provide a composition which allows to regenerate a surface, for example of reinforcement rods, at least partly restoring its properties lost due to corrosion.

Another purpose of the present invention is to provide a composition which is easy and quick to apply on the reinforcement rods.

The Applicant has devised, tested and embodied the present invention to overcome the shortcomings of the state of the art and to obtain these and other purposes and advantages.

### SUMMARY OF THE INVENTION

The present invention is set forth and characterized in the independent claims. The dependent claims describe other characteristics of the present invention or variants to the main inventive idea.

In accordance with the above purposes, and to resolve the technical problem disclosed above in a new and original way, also achieving considerable advantages compared to the state of the prior art, a stainless-steel mortar-like mixture to protect a surface from corrosion, in particular, but not exclusively, for concrete reinforcement rods, comprises an agglomerant in which metal material is dispersed. The latter comprises metal granules that reproduce the metal composition of a stainless steel. In particular, the metals comprise iron and chromium. Preferably, the metals optionally also comprise at least one chosen from nickel, manganese, zinc, copper, aluminum and their mixtures. Possibly, molybdenum and/or titanium and/or niobium and/or vanadium can also be present. In preferential solutions, the above metals comprise at least iron, chromium and nickel. The agglomerant comprises one or more self-crosslinking aliphatic resins in aqueous solution. Advantageously, the mixture is suitable to form, on the metal surfaces, a layer with a thickness of at least 500µm, preferably of at least 750µm, more preferably of at least 1mm. More preferably, the mixture is suitable to form, on the metal surfaces, a layer with a thickness comprised between 1mm and 50mm. The layer that is created can be of uniform thickness or of variable thickness, depending on requirements. The uniformity or not of the thickness can be obtained during the application of the mortar, whether by hand or through spraying or other.

The idea behind the invention is to create a mixture that allows the surface to be protected, for example the reinforcement rod, to have a resistance to corrosion similar to that of stainless steel. We have observed that not only does the above mixture provide protection to a surface, for example the reinforcement rods, but also that the metal granules enrich the surface, for example the reinforcement rods, on which the composition is applied. The fact of creating a layer with a thickness in the order of a few millimeters allows the reinforcement rods to be wrapped with highly ductile steel, reinforcing the hold and elasticity of the reinforced concrete rods. This allows to reinforce the structure of the iron rods, especially if thinned due to the rust peeling action.

The mixture has a consistency similar to that of mortar. In the context of the present application, when the term mortar is used, it is meant a mortar-like substance, that is, a mixture with a consistency similar to that of mortar.

The mixture is free of cement and cementitious bonds. As stated, cement is hygroscopic and absorbs water and humidity, which are among the main agents that cause iron corrosion. Therefore, providing a mixture without cement and without cementitious bonds allows to limit, or even block, the absorption of water and humidity, thus ensuring that a harmful environment for iron is not created.

The mixture comprises at least iron and chromium, which are known to be the main components of stainless steel. Preferably iron, the main component, is present at more than 50% by weight on the total weight of the granules. Chromium can be present up to 25% by weight, preferably up to 20%, more preferably more than 10.5% by weight.

Favorably, in addition to iron and chromium, nickel is also present in the metal granules. This metal allows to increase the resistance of the steel to corrosion. In addition, in the right proportions, nickel is part of the composition of austenitic steels which have excellent resistance to corrosion. Nickel can represent up to 15% by weight, preferably up to 10% by weight. Nickel can also be present in a proportion greater than 8% by weight, in order to reproduce the properties of austenitic steels.

According to some embodiments, manganese granules are also present among the metal granules. This metal can act as a deoxidizer and therefore contribute to restoring the surface on which the composition is applied, for example the reinforcement rods. Manganese can be present up to 7% by weight, preferably up to 3% by weight.

Copper can be provided in the metal material of the composition as a protective agent for surfaces subjected to being corroded by marine aerosol. Aluminum, on the other hand, has antioxidant protective properties and has, as a metal, a low specific weight, which makes it advantageous for producing protective coatings in sectors where the weight has to remain contained, such as the nautical, aviation or automotive sectors.

According to some embodiments, the metal granules have a granulometry comprised between 20µm and 200µm, preferably between 30µm and 180µm, more preferably between 40µm and 175µm, more preferably between 45µm and 175µm, even more preferably between 45µm and 150µm. The granulometries are selected using sieves that are available on the market (for example Endecotts Microplate) with a nickel plate with apertures calibrated with a minimum of 5 µm and a progressive scale of larger sizes with intervals of 5 µm, or, for less reduced granulometries, with mesh bottoms of 100 µm and/or larger.

According to some embodiments described here, the aqueous solution comprises a plurality of self-crosslinking aliphatic resins mixed together. Preferably, the aliphatic resins are mixed cold under slow stirring.

The aliphatic resins can be chosen from acrylic resins, in particular those that form hydrophobic polymeric chains in aqueous solution, acrylic/styrene copolymers, polysiloxane and silane resins, polysiloxane copolymers, polyurethanes, epoxy resins and their mixtures. These compounds can be present in the form of emulsion or dispersion, possibly in the presence of one or more hydrophobic polymeric lattices.

The aqueous solution can comprise, in addition to the one or more aliphatic resins, an electrically conducting compound such as an electrolyte or a polyelectrolyte. In particular, the aqueous solution can comprise a polyelectrolyte, preferably of the anionic type. Unlike electrolytes, polyelectrolytes, which are polymers, can affect the viscosity, structure and stability of the composition, as well as play a role in the interactions that occur in the composition or with the reinforcement rods.

Advantageously, the aqueous solution can also comprise additives such as for example a crosslinking agent, a hardening crosslinking agent, a thickener and mixtures thereof.

According to some embodiments, the weight ratio of agglomerants:granules is comprised between 1:0.5 and 1:5, preferably between 1:1 and 1:5, more preferably between 1:1.5 and 1:5, even more preferably between 1:2 and 1:5. These proportions between agglomerant and granules give the mixture the right density to allow the formation of layers with a thickness in the order of one millimeter. It is advantageous that the granules are preponderant by weight with respect to the liquid part, represented by the agglomerant. This increases the density of the mixture, which makes it even more stable when applied to the metal surface.

The above mixture can be formulated in various ways, for example in highly flexible semi-fluid mortar or with hardener, in liquid mortar in cartridge or for spray delivery. The preferred formulation is semi-fluid mortar, since it allows to achieve greater thicknesses of the layer that is formed on the metal surface. In any case, the formulation can be of the single-component or two-component type, that is, to be mixed with another component. The type of formulation may depend on the weight ratio between aqueous solution and granules and/or on the average granulometry of the granules.

In particular, in a formulation in semi-fluid mortar, the average granulometry of the one or more metals is advantageously comprised between 65µm and 200µm, preferably between 70µm and 175µm, more preferably between 75µm and 150µm.

In a formulation in fluid mortar, the average granulometry of the one or more metals is lower compared to the semi-fluid mortar, that is, between 20µm and 55µm, preferably between 30µm and 50µm, more preferably between 40µm and 45µm, even more preferably it is substantially 45µm.

In a formulation in semi-fluid mortar, the weight ratio of agglomerants:granules is comprised between 1:3 and 1:5, preferably between 1:3.5 and 1:4.5, more preferably it is substantially 1:4.

In a formulation in fluid mortar, the weight ratio of agglomerants:granules is comprised between 1:0.5 and 1:2.5, preferably between 1:1 and 1:2.

According to one aspect, there is also provided a method to protect a surface from corrosion, for example, but not limited to, the reinforcement rods of reinforced concrete, which comprises a step of applying the mixture of stainless steel described above on such surface.

In particular, the mixture of stainless steel can be applied with a trowel and/or by spreading if the composition is formulated in semi-fluid mortar, or by spraying if the composition is formulated in fluid mortar.

The method provides to apply the mixture of stainless steel in the form of a layer having a thickness of at least 500µm, preferably at least 750µm, more preferably at least 1mm. More preferably, the method provides to form, on the metal surfaces, a layer of mixture with a thickness comprised between 1mm and 50mm.

According to one aspect, there is provided a use of a mixture comprising granules of one or more metals dispersed in an aqueous solution of one or more self-crosslinking aliphatic resins to protect a surface from corrosion, in particular, but not limited to, reinforcement rods of reinforced concrete. Preferably, the mixture is as in any of the embodiments described above.

### DESCRIPTION OF SOME EMBODIMENTS

Unless otherwise defined, all the technical and scientific terms used here and hereafter have the same meaning as commonly understood by a person with ordinary experience in the field of the art to which the present invention belongs. Even if methods and materials similar or equivalent to those described here can be used in practice and in the trials of the present invention, the methods and materials are described hereafter as an example. In the event of conflict, the present application shall prevail, including its definitions. The materials, methods and examples have a purely illustrative purpose and shall not be understood restrictively.

All measurements are carried out, unless otherwise indicated, at 25°C (ambient temperature) and at atmospheric pressure. All temperatures, unless otherwise indicated, are expressed in degrees Celsius.

All percentages and ratios indicated shall be understood to refer to the weight of the total composition (w/w), unless otherwise indicated.

All percentage intervals reported here are given with the understanding that the sum with respect to the overall composition is 100%, unless otherwise indicated.

All the intervals reported here shall be understood to include the extremes, including those that report an interval "between" two values, unless otherwise indicated.

The present description also includes the intervals that derive from uniting or overlapping two or more intervals described, unless otherwise indicated.

The present description also includes the intervals that can derive from the combination of two or more values taken at different points, unless otherwise indicated.

Where water is mentioned, this shall be understood to mean distilled water, unless otherwise specified.

A mixture to protect a surface from corrosion, for example for concrete reinforcement rods, comprises an aqueous solution of one or more self-crosslinking aliphatic resins, in which granules of one or more metals are dispersed homogeneously. The mixture is therefore a stainless steel mortar-like mixture which, however, is free of cement and cementitious binders. In this way, it has no hygroscopic component, which gives it a water-repellent effect and a substantially neutral pH.

By self-crosslinking resins are meant resins that can crosslink on their own, without requiring the addition of another crosslinking agent, in particular through drying of the hydrated part, at ambient temperature.

The use of self-crosslinking resins, in particular of self-crosslinking aliphatic resins, allows to avoid the use of aromatic solvents (such as isocyanates) while optimizing the creaminess of the mixture, its duration in ready-to-use packaging on construction sites, the application times, the strong adhesiveness to the medium.

The metal granules reproduce the metal composition of a stainless steel and advantageously comprise iron, chromium, and possibly also nickel and manganese, which generally fall within the composition of stainless steel. These compounds can therefore effectively protect a surface, in particular reinforcement rods, against corrosion. Some elements, for example manganese, also have deoxidizing properties, and therefore allow to at least partly restore the original characteristics of the iron.

The granules can also comprise zinc and/or copper and/or aluminum. Possibly, molybdenum and/or titanium and/or niobium and/or vanadium may also be present amongst such metal granules

The metal granules preferably come from recycled material, for example from the shredding of recycled metals, suitably ventilated and dusted, then screened to obtain a predetermined granulometry. In this case, the granulometry is comprised between 20µm and 200µm, advantageously between 30µm and 180µm, more advantageously between 40µm and 175µm, more advantageously between 45µm and 175µm, even more advantageously between 45µm and 150µm.

The aqueous solution is based on self-crosslinking aliphatic resins, for example emulsion or dispersion of acrylic resins that form hydrophobic polymeric chains, with or without hydrophobic polymeric crosslinks, polyurethane dispersion, epoxy resin, dispersion of acrylic/styrene copolymers, polysiloxane copolymer, emulsion of polysiloxane and silane resins, and their mixtures.

These self-crosslinking aliphatic resins allow to obtain, together with the granules, a mixture with a consistency similar to that of mortar, which allows to create layers with a thickness of a few millimeters.

In accordance with some embodiments described here, the aqueous solution also includes a polyelectrolyte, for example a sodium salt of a carboxylated polyelectrolyte.

Other compounds may be present in the aqueous solution, such as urethane modified under hydrophobic conditions with ethylene oxide, a polycarbodiimide as a crosslinking agent, a polyamine as a hardening crosslinking agent, pyrogenic silica as a thickener and their mixtures.

The use of the polycarbodiimide together with the self-crosslinking aliphatic resins is particularly advantageous, since it acts as a thickener and preservative of the aqueous dispersion. This allows to have a long-life single-component preparation with water that has no "pot life" problems.

As will be seen below, the composition can be formulated in a semi-fluid or fluid formulation, for example for spray delivery, possibly in two-component mode.

Below are some examples of mortars and their production process.

### Example 1

The metal material consists of iron, chromium, nickel and manganese in the following proportions (the percentages are expressed by weight on the total weight of the metal material only, that is, of the granules):

| | |
|---|---|
| Iron (CAS 7439-89-6; EINECS - 231-096-4) | 67% |
| Chromium (CAS 7440-47-3; EINECS - 231-157-5) | 20% |
| Nickel (CAS 7440-02-0; EINECS - 231-111-4) | 10% |
| Manganese (CAS 7439-96-5; EINECS - 231-105-1) | 3% |

The proportion of iron can be increased, while the proportions of chromium, nickel and manganese can be decreased in order to compensate for any increase in the proportion of iron.

This metal material composition is used in all the following examples. The granulometry can change according to the type of mortar to be produced, therefore it will be indicated in each type in the following examples.

A method to produce the metal material provides to weigh the different metals to be inserted and to introduce the granulates in a container, for example a tilting steel container, in the proportions provided according to the type of mortar to be produced.

### Example 2

A single-component semi-fluid mortar with high flexibility is prepared, to be packaged in buckets. In this mortar, the composition of the agglomerant is as follows (the percentages are expressed by weight on the total weight of the agglomerant alone):

| | |
|---|---|
| 1. Emulsion/dispersion in aqueous solution of acrylic resins that form hydrophobic polymer chains | 60% |
| 2. Dispersion of acrylic/styrene copolymers in aqueous solution | 25% |
| 3. Emulsion of polysiloxane and silane resins | 10% |
| 4. Sodium salt of a carboxylated polyelectrolyte | 3% |
| 5. Urethane modified under hydrophobic conditions with ethylene oxide | 2% |

Please note that in this example the concentrations indicated for the emulsion of acrylic resins and the polyelectrolyte are to be understood as minimum values, while the concentrations of the other three components are maximum values. In other words, a semi-fluid mortar can be obtained by increasing the emulsion concentration of acrylic resins and polyelectrolyte, and consequently decreasing the concentration of acrylic/styrene copolymers, polysiloxane and silane resins and urethane.

The weight ratio of agglomerant:granules is equal to 1:4. The average granulometry of the metal material is comprised between 75µm and 150µm.

One method to produce the agglomerant provides to pour the components in the sequence as well as in the proportions indicated in the table into a receptacle, for example of the stainless steel type provided with a paddle stirrer. In order to limit the processing waste resulting from the transfers as much as possible, it is provided that the production occurs directly in the buckets intended for final use. The residues of the product are in fact lost with the cleaning of the container in which they are mixed.

The granules are then slowly poured, for example "flush", into a bucket in which the desired agglomerant is already present. The granules are homogeneously mixed with the agglomerant by slow stirring with the aid of a stirrer, for example of the type equipped with inclined blades. The stirrer with inclined blades allows to create a rising flow of the mortar from the bottom of the bucket toward the top, which determines a more homogeneous dispersion of the metal material in the agglomerant.

Once the mixing is finished, the granulates are kept in suspension by means of the specific additives present in the agglomerant.

Once the dispersion and homogenization of the mortar is completed, the inside of the bucket is cleaned with a sponge wet with pure water, in order to remove possible splashes caused by the blades of the mixer.

Then appropriate shapes of polyethylene sheets are prepared, which are rested inside the bucket in direct contact with the surface of the mortar and any residual air between the mortar and the protective film is released.

The bucket is then closed with the appropriate lid, after which the labels to identify the product are placed on the bucket.

With the mortar-like mixture of this example, it has been verified that it is possible to apply layers with a thickness of up to 37mm.

### Example 3

A two-component semi-fluid mortar to be packaged in buckets is prepared. The agglomerant has the following composition (the percentages are expressed by weight on the total weight of the agglomerant alone):

| | |
|---|---|
| 1. Water based polyurethane dispersion | 70% |
| 2. Dispersion of acrylic/styrene copolymers in aqueous solution | 12% |
| 3. Emulsion of polysiloxane and silane resins | 8% |
| 4. Sodium salt of a carboxylated polyelectrolyte | 3% |
| 5. Urethane modified under hydrophobic conditions with ethylene oxide | 2% |
| 6. Polycarbodiimides-based crosslinking agent | 5% |

In this example, the two-component semi-fluid mortar is obtained also by increasing the proportions of polyurethane dispersion, polyelectrolyte and urethane, consequently decreasing the proportions of acrylic/styrene copolymers and the emulsion of polysiloxane and silane resins.

The weight ratio of agglomerant:granules is equal to 1:4. The average granulometry of the metal material is comprised between 75µm and 150µm.

The methods of production and packaging in a bucket are identical to those described in example 2, with the difference that the crosslinking agent is not mixed together with the other components, which form the main part of the agglomerant, but it is to be supplied separately in order to be mixed with the main part at the time of application.

For this purpose, the crosslinking agent is packaged in the lid, specially designed to house a predefined quantity of product, of the bucket in which the main part of the agglomerant is packaged, or in a separate bucket, of smaller sizes, to be supplied together with the bucket of the main part of the agglomerant.

With the mortar-like mixture of this example, it has been verified that it is possible to apply layers with a thickness of up to 45mm.

### Example 4

A two-component semi-fluid mortar with hardener is prepared, to be packaged in buckets. The agglomerant is prepared by mixing the following compounds (the percentages are expressed by weight on the total weight of the agglomerant alone):

| | |
|---|---|
| 1. Water-based epoxy resin | 64% |
| 2. Polysiloxane copolymer | 3% |
| 3. Pyrogenic silica | 1% |
| 4. Polyamine hardening and crosslinking agent | 32% |

In this example, the proportions of the epoxy resin and of the polyamine are to be understood as minimum values, while the proportions of polysiloxane copolymer and silica are to be understood as maximum values.

The weight ratio of agglomerant:granules is equal to 1:4. The average granulometry of the metal material is comprised between 75µm and 150µm.

The methods of production and packaging in a bucket are identical to those described in example 3.

With the mortar-like mixture of this example, it has been verified that it is possible to apply layers with a thickness of up to 46mm.

### Example 5

A fluid mortar for spray delivery is prepared, to be packaged in buckets. The agglomerant has the following composition (the percentages are expressed by weight on the total weight of the agglomerant alone):

| | |
|---|---|
| 1. Emulsion/dispersion of acrylic resins in aqueous solution, with hydrophobic polymeric lattice | 68% |
| 2. Dispersion of acrylic/styrene copolymers in aqueous solution | 20% |
| 3. Emulsion of a mixture of silane/polysiloxane resin | 8% |
| 4. Sodium salt of a carboxylated polyelectrolyte | 2% |
| 5. Urethane modified under hydrophobic conditions with ethylene oxide | 2% |

The proportions of emulsion of acrylic resins, acrylic/styrene copolymer dispersion, silane/polysiloxane resin mixture and polyelectrolyte can be increased, while the proportion of urethane can be decreased.

The weight ratio of agglomerant:granules is equal to 1:1, the metal material has an average granulometry of 45µm.

The methods of production and packaging in a bucket are as described in example 2.

With the mortar-like mixture of this example, it has been verified that it is possible to apply layers with a thickness of up to 13mm.

### Example 6

A fluid mortar is prepared to be packaged in cartridges for it to be delivered by spraying of a creamy, filiform paste, for example using a piston gun. The composition of the agglomerant is shown in the following table (the percentages are expressed by weight on the total weight of the agglomerant alone):

| | |
|---|---|
| 1. Emulsion/dispersion of acrylic resins in aqueous solution, with hydrophobic polymeric lattices | 60% |
| 2. Dispersion of acrylic/styrene copolymers in aqueous solution | 25% |
| 3. Emulsion of a mixture of silane/polysiloxane resin | 10% |
| 4. Sodium salt of a carboxylated polyelectrolyte | 3% |
| 5. Urethane modified under hydrophobic conditions with ethylene oxide | 2% |

The proportions of emulsion of acrylic resins and polyelectrolyte indicated are minimum values, these proportions can be increased while obtaining a mortar to be packaged in a cartridge. Conversely, the proportions of acrylic/styrene copolymers, the mixture of silane/polysiloxane resin and urethane are to be considered as maximum values.

The weight ratio of agglomerant:granules is equal to 1:2, the granules have an average granulometry of 45µm.

A method to produce the agglomerant is as indicated in example 2. A method to package in cartridges provides dedicated plants, in particular of the semiautomatic or fully automated type. These plants are already available on the market.

Once the mortar has been prepared, it is fed, by means of a feed tube, into a suitable housing of the cartridges which are filled one at a time, according to a predetermined dosage. The delivery of the doses of mortar occurs on the command of an operator, for example acting on a pedal, or automatically if the plant allows it. Once delivered into the cartridge housing, the mortar can be compressed in order to expel any residue of air that may be present.

The cartridges, able to be delivered by means of delivery devices, for example of the piston gun type, allow operators to have a product that is ready-to-use, available for needs that do not require large quantities, easy to apply, practical and clean for transport even in work bags, with a long shelf life and which can therefore be used even occasionally. This last requirement is achieved thanks to the packaging in a vacuum cartridge.

From the examples provided it is clear that the mortar disclosed above, thanks to the different formulations it can have, can be applied using various types of application, in particular directly on site with the aid of normal work tools in the construction field, such as for example a bricklayer's trowel to restore concrete demolitions made to uncover rusty iron, a trowel to finish flat surfaces, plastering machines for large-sized fillings, a paint gun to finish large surfaces or a cartridge delivery piston gun to fill fissures, seal cracks and close holes.

The application of the metal mortar described above can be performed by spreading, troweling and/or spraying, depending on requirements and on the formulation of the mortar. The mortar can be applied directly on the reinforcement rods, or in general on the surface to be protected and restored, and/or in any case on the concrete structure surrounding the reinforcement rods.

With the mortar-like mixture of this example, it has been verified that it is possible to apply layers with a thickness of up to 28mm.

It is clear that modifications and/or additions of parts or steps may be made to the composition and method as described heretofore, without departing from the field and scope of the present invention, as defined by the claims.

It is also clear that, although the present invention has been described with reference to some specific examples, a person of skill in the art shall certainly be able to achieve many other equivalent forms of composition and method, having the characteristics as set forth in the claims and hence all coming within the field of protection defined thereby.

## Claims

1. Mixture to protect a surface from corrosion, comprising an agglomerant based on one or more self-crosslinking aliphatic resins in aqueous solution, in which a metal material is dispersed comprising metal granules which reproduce the metal composition of a stainless steel, wherein said metals comprise iron, chromium and possibly at least one of either nickel, manganese, zinc, copper or aluminum and their mixtures and wherein said mixture is free of cement and cementitious binders and wherein said mixture is suitable to form a layer with a thickness of at least 500µm.

2. Mixture as in claim 1, **characterized in that** the iron has a concentration greater than 50% by weight on the total weight of said granules.

3. Mixture as in claim 1 or 2, **characterized in that** the one or more metals comprise, in particular, iron, chromium, nickel and manganese, wherein in particular the iron has a concentration greater than or equal to 67% by weight, the chromium has a concentration lower than or equal to 20% by weight, the nickel has a concentration lower than or equal to 10% by weight and the manganese has a concentration lower than or equal to 3% by weight.

4. Mixture as in any claim hereinbefore, **characterized in that** the one or more metals have a granulometry between 40µm and 175µm.

5. Mixture as in any claim hereinbefore, **characterized in that** the one or more metals have a granulometry between 45µm and 150µm.

6. Mixture as in any claim hereinbefore, **characterized in that** the one or more metals have a granulometry between 75µm and 150µm.

7. Mixture as in any claim hereinbefore, **characterized in that** the proportion by weight of agglomerants:granules is comprised between 1:0.5 and 1:5.

8. Mixture as in any claim hereinbefore, **characterized in that** the one or more self-crosslinking aliphatic resins are selected from acrylic resins, in particular those that form hydrophobic polymer chains in aqueous solution, acrylic/styrene copolymers, polysiloxane and silane resins, polysiloxane copolymers, polyurethanes, epoxy resins and their mixtures, wherein possibly the one or more aliphatic resins are in the form of an emulsion or dispersion in water.

9. Mixture as in any claim hereinbefore, **characterized in that** it is formulated in semi-fluid mortar, wherein the weight ratio of agglomerants:granules is equal to 1:4 and the granules have an average granulometry comprised between 75µm and 150µm.

10. Mixture as in claim 9, **characterized in that** it is formulated in two-component semi-fluid mortar **and in that** it comprises a crosslinking agent, possibly hardening, separated from the aqueous solution of one or more self-crosslinking aliphatic resins.

11. Mixture as in any claim from 1 to 8, **characterized in that** it is formulated in fluid mortar for delivery by means of spraying, wherein the weight ratio of agglomerants:granules is equal to 1:1 and the granules have an average granulometry equal to 45µm.

12. Method to coat and protect a surface from corrosion, **characterized by** applying a mixture as in any claim hereinbefore to said surface and forming a layer of said mixture with a thickness of at least 500µm.

13. Method as in claim 12, **characterized in that** a layer of mixture is formed with a thickness of at least 1mm.

14. Method as in claim 12 or 13, **characterized in that** the mixture is formulated in semi-fluid mortar and its application provides a step of spreading and/or troweling on a cementitious structure, or the mixture is formulated in fluid mortar and its application provides a step of spraying flush onto cracks or holes.

15. Use of a mixture as in any claim from 1 to 11, to coat and protect a surface from corrosion.
